# EUROPÄISCHE PATENTANMELDUNG

(11) **EP 3 431 373 A1**
(43) Veröffentlichungstag der Anmeldung: **23.01.2019**
(21) Anmeldenummer: 18184396.2
(22) Anmeldetag: 19.07.2018
(51) Int. Cl.: B62H 5/00

(54) **FAHRZEUG**

(30) Priorität: 21.07.2017 DE 102017006848
(71) Anmelder: Marquardt Verwaltungs-GmbH, 78604 Rietheim-Weilheim (DE)
(72) Erfinder: Broghammer, Peter, 78573 Wurmlingen (DE); Becher, Andreas, 78052 Villingen-Schwenningen (DE); Stehle, Wolfgang, 78603 Renquishausen (DE); Lemperle, Tizian, 78652 Deißlingen (DE)
(74) Vertreter: Otten, Roth, Dobler & Partner mbB Patentanwälte

(57) **Zusammenfassung**

Die Erfindung betrifft ein Fahrzeug (1), insbesondere ein Pedelec, ein E-Bike o. dgl., mit einem Rahmen (2) und mit einem an dessen einen Seite (6) am und/oder im Rahmen (2) unmittelbar oder mittelbar befestigten Schlosskabel (5). Das Schlosskabel (5) ist gegebenenfalls ausziehbar und/oder einschiebbar im und/oder am Rahmen (2), insbesondere in einem Rahmenrohr (11) des Rahmens (2), in der Art eines integrierten Schlosskabels angeordnet. An der anderen Seite (7) des Schlosskabels (5) ist ein Stecker (8) zur Aufnahme in einer Steckeraufnahme (9) am Rahmen (2) angeordnet. Der Stecker (8) ist, insbesondere mechanisch und/oder elektrisch, verriegelbar in der Steckeraufnahme (9) am Rahmen (2), derart dass das Fahrzeug (1) diebstahlgesichert an einem Gegenstand (10) mittels des Schlosskabels (5) festlegbar ist. Es ist ein Steuergerät (12) zur Überwachung des Schlosskabels (5) vorgesehen. Die Überwachung erfolgt mittels paarungsbasierter Kryptografie der Übertragung eines Geheimnisses, insbesondere vom Steuergerät (12), über das Schlosskabel (5), derart dass ein unautorisiertes Durchtrennen des Schlosskabels (5) und/oder ein unautorisiertes Entfernen des Steckers (8) aus der Steckeraufnahme (9) detektierbar ist.

## Beschreibung

Die Erfindung betrifft ein Fahrzeug nach dem Oberbegriff des Patentanspruchs 1.

Bei diesen Fahrzeugen handelt es sich um solche, welche muskelkraftbetrieben und/oder motorunterstützt sind. Insbesondere handelt es sich dabei um mit einem Elektroantrieb versehene, motorunterstützte Fahrzeuge, die zusätzlich muskelkraftbetrieben werden, wie Pedelecs, E-Bikes, LEV(Light Electric Vehicle)s oder dergleichen.

Ein derartiges Fahrzeug besitzt einen Rahmen. Zwecks Diebstahlschutz ist ein Schlosskabel an dessen einen Seite am und/oder im Rahmen unmittelbar oder mittelbar befestigt. Gegebenenfalls kann das Schlosskabel ausziehbar und/oder einschiebbar im und/oder am Rahmen, und zwar insbesondere in einem Rahmenrohr des Rahmens, in der Art eines integrierten Schlosskabels angeordnet sein. An der anderen Seite des Schlosskabels ist ein Stecker zur Aufnahme in einer Steckeraufnahme am Rahmen angeordnet. Der Stecker ist wiederum in der Steckeraufnahme am Rahmen verriegelbar, derart dass das Fahrzeug diebstahlgesichert an einem Gegenstand, beispielsweise einem Laternen-Masten, mittels des Schlosskabels festlegbar ist. Die Verriegelung des Steckers in der Steckeraufnahme kann dabei mechanisch und/oder elektrisch erfolgen. Wird das Kabel durchtrennt oder der Stecker gewaltsam aus der Steckeraufnahme entfernt, so ist nachteiligerweise das Fahrzeug gegen Diebstahl nicht weiter gesichert.

Der Erfindung liegt die Aufgabe zugrunde, den Diebstahlschutz für das Fahrzeug weiter zu verbessern.

Diese Aufgabe wird bei einem gattungsgemäßen Fahrzeug durch die kennzeichnenden Merkmale des Anspruchs 1 gelöst.

Beim erfindungsgemäßen Fahrzeug ist ein Steuergerät zur Überwachung des Schlosskabels vorgesehen. Die Überwachung erfolgt mittels paarungsbasierter Kryptografie der Übertragung eines Geheimnisses, und zwar insbesondere zwischen dem Steuergerät sowie dem Stecker und/oder der Steckeraufnahme, über das Schlosskabel. Dadurch ist ein Durchtrennen des Schlosskabels und/oder ein unautorisiertes Entfernen beziehungsweise gewaltsames Herausziehen des Steckers aus der Steckeraufnahme sofort detektierbar, da dann das Geheimnis nicht mehr ungestört übertragbar ist. Erforderlichenfalls können dann entsprechende Maßnahmen gegen den Diebstahlversuch unternommen werden, beispielsweise das Fahrzeug in einen fahruntüchtigen Zustand versetzt werden. In vorteilhafter Weise ist somit eine wesentliche Verbesserung des Diebstahlschutzes erzielt. Weitere Ausgestaltungen der Erfindung sind Gegenstand der Unteransprüche.

Handelt es sich um ein elektrisch antreibbares Fahrzeug, so kann am und/oder im Rahmen ein Akku angeordnet sein. Zweckmäßigerweise kann es sich dann bei dem Schlosskabel um ein Ladekabel für den Akku handeln. Der Akku ist dann mit der einen Seite des Ladekabels elektrisch verbunden, derart dass eine Energieübertragung mittels des Ladekabels von einer Ladestation auf den Akku zum Aufladen des Akkus ermöglicht ist. Insbesondere kann hierzu der Stecker an der anderen Seite des Ladekabels in eine Steckeraufnahme an der Ladestation einsteckbar sein. Das Ladekabel kann an der einen Seite fest mit dem Akku verbunden sein. Alternativ kann der Akku eine Akku-Steckdose zur Aufnahme eines an der einen Seite des Ladekabels befindlichen Akku-Steckers aufweisen, so dass das Ladekabel bei Bedarf angesteckt werden kann. In diesem Fall kann eine Verriegelungseinrichtung für die Akku-Steckdose im Akku vorgesehen sein, derart dass der in der Akku-Steckdose eingesteckte Akku-Stecker des Ladekabels mittels der Verriegelungseinrichtung in der Akku-Steckdose sperrbar und/oder freigebbar ist. In vorteilhafter Weise ist dadurch der Diebstahlschutz auch auf Komponenten des Fahrzeugs, und zwar insbesondere auf den teuren Akku, erstreckt.

Zur Unterstützung der Übertragung des Geheimnisses für die paarungsbasierte Kryptografie kann eine Elektronik mit dem Stecker am Schloss- und/oder Ladekabel und/oder mit der Steckeraufnahme in Verbindung stehen, und zwar derart dass die paarungsbasierte Kryptografie zwischen dem Steuergerät und der Elektronik durchführbar ist. Zwecks kompakter Anordnung kann die Elektronik im Stecker und/oder in der Steckeraufnahme in integrierter Art befindlich sein. Die paarungsbasierte Kryptografie kann in sicherer Art und Weise mittels eines verschlüsselten Frage-Antwort-Austausches (Challenge-Response-Prinzip) des Geheimnisses zwischen dem Steuergerät und der Elektronik erfolgen. Zwecks ständiger Überwachung des Schloss- und/oder Ladekabels kann die paarungsbasierte Kryptografie als dauerhaft zyklische paarungsbasierte Kryptografie ausgestaltet sein. Als sicherer Standard kann die Verschlüsselung mittels des Advanced Encryption Standard AES, insbesondere mit einem 128-Bit-Schlüssel (128 AES), erfolgen.

Eine weitere Steigerung der Diebstahlsicherheit kann dadurch erreicht werden, indem ein Lichtleiter im Schloss- und/oder Ladekabel vorgesehen ist. Das Signal für die paarungsbasierte Kryptografie kann dann als ein optisches Signal mittels des Lichtleiters über das Schloss- und/oder Ladekabel übertragbar sein. Dadurch ist ein Umgehen der Detektion eines durchtrennten Schloss- und/oder Ladekabels durch voriges elektrisches Überbrücken zumindest erschwert. Das optische Signal kann für die Weiterverarbeitung im Steuergerät und/oder im Stecker und/oder in der Steckeraufnahme in ein elektrisches Signal wandelbar sein. Die Umwandlung zwischen einem optischen und einem elektrischen Signal kann zweckmäßigerweise in der Elektronik erfolgen.

In weiterer Ausgestaltung kann bei Durchtrennen des Schloss- und/oder Ladekabels und/oder bei, gegebenenfalls gewaltsamen, Entfernen des Steckers aus der Steckeraufnahme Nachfolgendes vorgesehen sein:
- Es kann ein Alarm direkt am Fahrzeug auslösbar sein. Hierfür kann beispielsweise eine Sirene verwendet werden. Dadurch können in der Umgebung des Fahrzeugs befindliche Personen auf den Diebstahlversuch aufmerksam gemacht werden, um so den Diebstahlversuch gegebenenfalls zu vereiteln.
- Es kann eine Alarmmeldung auf eine entsprechende Schnittstelle, beispielsweise auf ein Mobilgerät, ein Smartphone o. dgl. des Benutzers, übertragbar sein. Dadurch kann der Benutzer unmittelbar auf den Diebstahlversuch aufmerksam gemacht werden, so dass dieser geeignete Gegenmaßnahmen veranlassen kann.
- Es kann eine automatische und/oder sofortige elektronische und/oder elektrische Verriegelung beziehungsweise Außerbetriebsetzung von einzelnen Komponenten des Fahrzeugs, beispielsweise des Steuergeräts (Computer Control Unit - CCU) für den Antrieb des Fahrzeugs, des Batteriemanagementsystems (BMS) für den Akku, eines Displays und/oder Eingabegeräts (Human-Machine-Interface - HMI) o. dgl., erfolgen. Im Falle eines Diebstahls werden somit zumindest einzelne Komponenten des Fahrzeugs unbrauchbar gemacht, womit das Fahrzeug für den Dieb wertlos wird.
- Es kann eine automatische und/oder sofortige mechanische Verriegelung beziehungsweise Blockierung von einzelnen Komponenten des Fahrzeugs erfolgen. Beispielsweise lassen sich das Tretlager, die Antriebsachse o. dgl. in diesem Falle verriegeln, so dass das Fahrzeug fahruntüchtig wird.

Zum Schutz und/oder zwecks einfachem Transport kann das Schloss- und/oder Ladekabel für den Fahrbetrieb vollständig im Rahmen verstaubar sein. Des Weiteren kann die Verriegelung des Steckers in der Steckeraufnahme und/oder des Akku-Steckers in der Akku-Steckdose bei erfolgreicher Authentifizierung des berechtigten Nutzers sperrbar und/oder freigebbar sein. Diese Authentifizierung kann beispielsweise mittels einer im Besitz des berechtigten Nutzers befindlichen Schlüsselkarte, einer Eingabe eines Codes durch den berechtigten Nutzer, anhand eines biometrischen Merkmals des berechtigten Nutzers o. dgl. erfolgen.

Die Erfindung stellt weiterhin ein Verfahren zur Diebstahlsicherung eines Fahrzeugs, insbesondere eines muskelkraftbetriebenen und/oder motorunterstützten Fahrzeugs, wie ein Pedelec, ein E-Bike, ein LEV(Light Electric Vehicle) o. dgl., bereit. Das Fahrzeug weist ein Schloss- und/oder Ladekabel auf, wobei das Schloss- und/oder Ladekabel mittels paarungsbasierter Kryptografie durch Übertragung eines Geheimnisses über das Schloss- und/oder Ladekabel überwacht wird. Und zwar wird das Schloss- und/oder Ladekabel insbesondere mittels einer dauerhaft zyklischen paarungsbasierten Kryptografie überwacht. Die Übertragung des Geheimnisses kann als verschlüsselter Frage-Antwort-Austausch erfolgen. Dadurch ist ein Durchtrennen des Schloss- und/oder Ladekabels und/oder ein unautorisiertes Entfernen eines Steckers am Schloss- und/oder Ladekabel aus einer Steckeraufnahme detektierbar. Wird auf diese Weise ein Diebstahlversuch detektiert, so können dann entsprechende Gegenmaßnahmen vorgenommen werden.

Für eine besonders bevorzugte Ausgestaltung des erfindungsgemäßen Fahrzeugs ist nachfolgendes festzustellen.

Bei elektrisch angetriebenen Fahrzeugen, insbesondere bei E-Bikes und/oder Pedelecs, bietet sich aufgrund der ohnehin vorhandenen Elektronik die elektronische Diebstahlsicherung an, die gegenüber der herkömmlichen mechanischen Sicherung zahlreiche Vorteile mit sich bringt. Hierbei sollte das Fahrzeug nicht nur abgeschlossen sondern vor allem an einem feststehenden Gegenstand angeschlossen werden, so dass das Fahrzeug im abgeschlossenen Zustand nicht einfach weggetragen werden kann. Aufgrund der Tatsache, dass der Akku solch eines Fahrzeuges regelmäßig geladen werden muss und dafür ohnehin ein Ladekabel vorhanden ist, kann es sich des Weiteren anbieten, für das Anschließen des Fahrzeugs an den Gegenstand eben dieses Ladekabel zu verwenden. In weiterer Ausgestaltung der Erfindung wird die Idee dieses multifunktionalen Schloss- und/oder Ladekabels sowie des elektronischen Ab- und/oder Anschließens weiter umgesetzt.

Beispielsweise kann bei einem E-Bike das Kabel
- ein reines Schlosskabel mit elektrischer Überwachung oder
- ein Ladekabel oder
- ein kombiniertes Lade- und/oder Schlosskabel
sein. Das Kabel ist an einem Ende über einen Stecker mit dem Akku verbunden, der sich im Rahmen, beispielsweise im Oberrohr, des E-Bikes befindet. Das andere Ende des Kabels, an dem sich ein weiterer Stecker zur Aufnahme in einer Steckdose und eine Elektronik mit Kryptographie im Stecker befindet, kann aus einer Öffnung des Rahmens, beispielsweise des Oberrohrs, herausgezogen werden. Selbiger Stecker dient jetzt aber nicht nur zur Aufnahme in einer Steckdose sondern auch zur Aufnahme einer kompatiblen Öffnung im selben Fahrzeug-Rahmen. Dadurch ermöglicht das Kabel nicht nur das Laden des Fahrzeugs, sondern auch das Anschließen des Fahrzeugs, beispielsweise an einem Baum oder an einer Straßenlaterne. Dabei wird das Anschließen dadurch gewährleistet, dass das Ladekabel aus der ersten Öffnung des Fahrzeug-Rahmens heraus gezogen wird, anschließend um einen beliebigen Gegenstand gezogen und dann in der zweiten Öffnung des Rahmens wieder eingesteckt wird. Der Diebstahlschutz wird nun dadurch realisiert, dass die CCU des Fahrzeugs per Challenge-Response-Prinzip über ein dauerhaft zyklisches kryptologisches Pairing, insbesondere 128 AES, mit dem Stecker jederzeit den Status des Kabels überwacht und dadurch ein unautorisiertes Durchtrennen oder Herausziehen des Kabels in Echtzeit registriert. In diesem Fall können über die CCU dann eine oder mehrere entsprechende Maßnahmen eingeläutet werden. Denkbar sind
- ein Sofort-Alarm direkt am Fahrzeug, beispielsweise über eine Sirene, und/oder
- eine Alarmmeldung auf eine entsprechende Schnittstelle, beispielsweise ein Smartphone, und/oder
- eine automatische sowie sofortige elektronische Verriegelung von einzelnen Komponenten, beispielsweise die CCU, das BMS, das HMI o. dgl., um diese im Falle eines Diebstahls unbrauchbar zu machen.
Des Weiteren ist ergänzend auch eine mechanische Verriegelung einzelner Komponenten, beispielsweise des Tretlagers oder der Antriebsachse, vorstellbar. Während der Fahrt oder wenn das Schloss- und/oder Ladekabel nicht benötigt wird, kann dieses vollständig im Rahmen verstaut werden.

Geschaffen ist somit ein Diebstahlschutz durch dauerhaft zyklisches kryptologisches Pairing bei einem elektrisch angetriebenen Fahrzeug. Das dauerhaft zyklische kryptologische Pairing, beispielsweise nach dem Standard 128 AES, ermöglicht einen Sekundär-Diebstahlschutz, indem einzelne E-Bike-Komponenten nach einem Diebstahl unbrauchbar werden. Es kann sich dabei anbieten, ein entsprechendes Warnhinweis-"Logo" am Fahrzeug zur Abschreckung des Diebes anzubringen. Vorteilhafterweise bietet das Logo auch einen Wiedererkennungswert und damit einen Marketing-Effekt.

Zusammenfassend lässt sich für das erfindungsgemäße Fahrzeug feststellen, dass ein Steuergerät zur Überwachung des Schlosskabels vorgesehen ist. Die Überwachung erfolgt mittels dauerhafter zyklischer paarungsbasierter Kryptografie (Challenge / Response) der Übertragung eines Geheimnisses, und zwar insbesondere vom Steuergerät, über das Schlosskabel. Dadurch ist ein unautorisiertes Durchtrennen des Schlosskabels und/oder ein unautorisiertes Entfernen beziehungsausweise Herausziehen des Steckers aus der Steckeraufnahme sofort detektierbar, da dann das Geheimnis nicht mehr ungestört übertragbar ist. Um ein einfaches Umgehen der Detektion eines durchtrennten Schlosskabels durch voriges elektrisches Überbrücken zu erschweren, kann das Geheimnis über einen im Schlosskabel befindlichen Lichtleiter übertragen werden. Dazu wird das elektrische Signal des Steuergeräts im Ursprung des Schlosskabels in ein optisches Signal gewandelt. Das optische Signal wird dann im Stecker wieder in ein elektrisches Signal rückgewandelt. Für die Rückübertragung wird die im Stecker oder in der Steckeraufnahme generierte elektrische Rückantwort auf das Geheimnis im Stecker wieder in ein optisches Signal gewandelt und im Ursprung des Schlosskabels wieder in ein elektrisches Signal rückgewandelt. Erforderlichenfalls können nach der Detektion einer Manipulation dann entsprechende Maßnahmen gegen den Diebstahlversuch unternommen werden, beispielsweise das Fahrzeug in einen fahruntüchtigen Zustand versetzt werden. In vorteilhafter Weise ist somit eine wesentliche Verbesserung des Diebstahlschutzes erzielt.

Die mit der Erfindung erzielten Vorteile bestehen insbesondere in Folgendem:
- Es ist ein sicherer und unkomplizierter elektronischer Diebstahlschutz eines elektrisch angetriebenen Fahrzeugs durch das, insbesondere dauerhaft zyklische, kryptologische Pairing gegeben.
- Die elektronische Diebstahlsicherung ermöglicht das automatische Einleiten weiterer Maßnahmen, falls es dennoch zu einem Diebstahlversuch kommen sollte. Beispielsweise kann dann ein Alarm ausgelöst werden.
- Durch das Zurückgreifen auf das ohnehin vorhandene Ladekabel entfällt die Notwendigkeit eines zusätzlichen, insbesondere mechanischen, Schlosses.
- Es werden zum einen Kosten und zum anderen auch Gewicht gespart.
- Die Handhabung für den Nutzer des Fahrzeugs wird vereinfacht.
- Durch die Möglichkeit, das Kabel im Fahrzeugrahmen zu verstauen, ist zum einen das permanente Mitführen des wichtigen Kabels und gleichzeitig aber auch ein problemloses sowie störungsfreies Mitführen sichergestellt.
- Das Vorhandensein des Steckers kann bei einem Durchtrennen des Kabels auf Grund des, insbesondere dauerhaft zyklischen, kryptographischen Pairings vom Dieb nicht vorgetäuscht werden, womit ein Durchtrennen des Kabels sicher zu erkennen ist.

Ein Ausführungsbeispiel der Erfindung mit verschiedenen Weiterbildungen und Ausgestaltungen ist in den Zeichnungen dargestellt und wird im Folgenden näher beschrieben. Es zeigen
- Fig. 1: ein in diebstahlgesicherter Anordnung befindliches Fahrzeug in schematischer Ansicht und
- Fig. 2: einen Ausschnitt des Fahrzeugs aus Fig. 1 sowie eine Ladestation und ein Ladekabel.

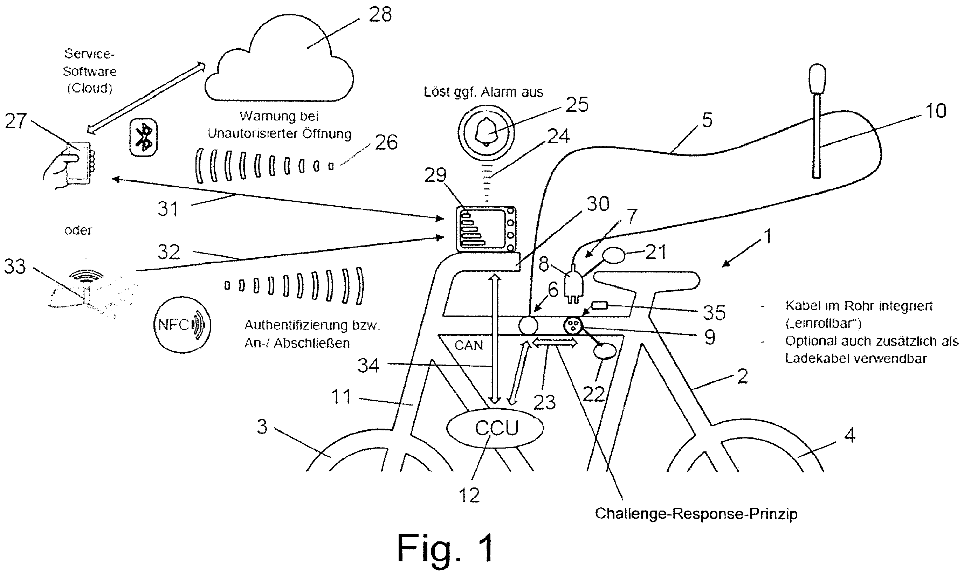

In Fig. 1 ist ein Fahrzeug 1 mit einem Elektroantrieb zu sehen, bei dem es sich insbesondere um ein Fahrrad, ein Pedelec, ein E-Bike o. dgl. handelt. Das Fahrzeug 1 besitzt einen Rahmen 2 und zwei am Rahmen 2 angeordnete Räder 3, 4. Am Fahrzeug 1 befindet sich ein Schlosskabel 5, das an dessen einen Seite 6 am und/oder im Rahmen 2 unmittelbar oder mittelbar befestigt ist. An der anderen Seite 7 des Schlosskabels 5 ist ein Stecker 8 angeordnet. Der Stecker 8 ist zur Aufnahme in einer Steckeraufnahme 9, die sich am Rahmen 2 befindet, ausgebildet. Dadurch ist das Fahrzeug 1 diebstahlgesichert an einem feststehenden Gegenstand 10, beispielsweise an einem Laternenpfosten, mittels des Schlosskabels 5 festlegbar, indem das Schlosskabel 5 um den Gegenstand 10 herumgeführt und anschließend der Stecker 8 verriegelbar in die Steckeraufnahme 9 eingesteckt wird.

Am Fahrzeug 1 befindet sich ein Steuergerät 12 zur Überwachung des Schlosskabels 5. Dadurch wird ein Diebstahlversuch mittels gewaltsamen Herausziehen des Steckers 8 aus der Steckeraufnahme 9 und/oder mittels Durchtrennen des Schlosskabels 5 zumindest bemerkt, so dass in einem solchen Falle dann geeignete Maßnahmen ergriffen werden können. Um das Vortäuschen eines intakten Schlosskabels 5 nach dessen Durchtrennung und/oder eines ordnungsgemäß in der Steckeraufnahme 9 befindlichen Steckers 8 nach dessen Herausziehen aus der Steckeraufnahme 9 zu verhindern, erfolgt die Überwachung mittels paarungsbasierter Kryptografie der Übertragung eines Geheimnisses über das Schlosskabel 5, und zwar insbesondere vom Steuergerät 12 ausgehend zum Stecker 8 und/oder zur Steckeraufnahme 9 sowie wieder zurückgehend zum Steuergerät 12, so dass das unautorisierte Durchtrennen des Schlosskabels 5 und/oder ein unautorisiertes Entfernen des Steckers 8 aus der Steckeraufnahme 9 mit hoher Sicherheit detektierbar ist. Dabei erfolgt die paarungsbasierte Kryptografie bevorzugterweise dauerhaft zyklisch, also indem das Geheimnis zeitlich periodisch wiederholend übertragen wird, um bei geringem Energieverbrauch eine dauerhafte Überwachung des Schlosskabels 5 sicherzustellen.

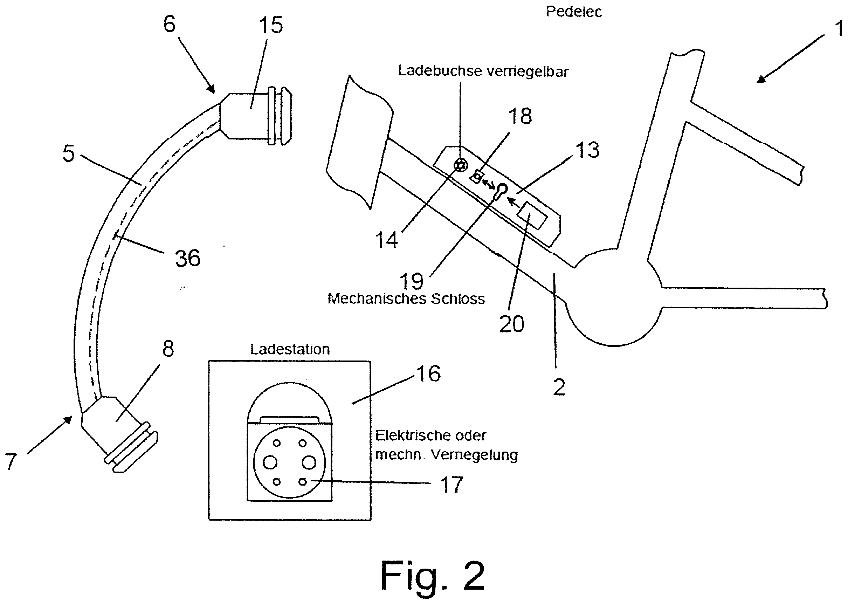

Wie bereits erwähnt, besitzt das Fahrzeug 1 einen Elektroantrieb. Für die Energieversorgung des Elektroantriebs ist am Rahmen ein Akku 13 angeordnet, wie in Fig. 2 zu sehen ist. Selbstverständlich kann der Akku 13 auch im Rahmen 2 oder an sonstiger Stelle des Fahrzeugs 1 angeordnet sein, was jedoch nicht weiter gezeigt ist. Der Akku 13 weist eine Akku-Steckdose 14 zur Aufnahme eines an der einen Seite 6 eines Ladekabels 5, das mit einer Ladestation 16 verbindbar ist, befindlichen Akku-Steckers 15 auf. An der anderen Seite 7 des Ladekabels 5 befindet sich der Stecker 8, der wiederum zur Verbindung mit der Ladestation 16 in eine Steckeraufnahme 17 an der Ladestation 16 einsteckbar ist, derart dass eine Energieübertragung von der Ladestation 16 auf den Akku 13 zum Aufladen des Akkus 13 ermöglicht ist. Im und/oder am Akku 13 ist eine Verriegelungseinrichtung 18 für die Akku-Steckdose 14 vorgesehen, derart dass der in der Akku-Steckdose 14 eingesteckte Akku-Stecker 15 des Ladekabels 5 mittels der Verriegelungseinrichtung 18 in der Akku-Steckdose 14 sperrbar und/oder freigebbar ist. Folglich ist das Ladekabel 5 über den Akku 13 mittelbar am Rahmen 2 befestigt. Das Ladekabel 5 kann weiterhin an dessen anderen Seite 7 an der Ladestation 16 verriegelt befestigbar sein. Damit ist dann das Fahrzeug 1 beim Aufladen des Akkus 13 mittels des Ladekabels 5 diebstahlgesichert an der Ladestation 16 angeordnet. Des Weiteren dient das Ladekabel 5 in der oben beschriebenen Art und Weise zur diebstahlsicheren Anordnung des Fahrzeugs 1 an einem Gegenstand 10, so dass es sich bei dem Schlosskabel 5 um ein Ladekabel beziehungsweise um ein kombiniertes Schloss- und/oder Ladekabel 5 handelt.

Im und/oder am Akku 13 ist ein mechanisches Schloss 19 zur Betätigung der Verriegelungseinrichtung 18 angeordnet. Selbstverständlich kann das Schloss auch als ein elektromotorisch und/oder elektromagnetisch betätigbares elektrisches Schloss 20 ausgebildet sein. Das mechanische Schloss 19 wird in herkömmlicher Weise mittels eines mechanischen Schlüssels vom Benutzer betätigt. Handelt es sich um ein elektrisches Schloss 20, so kann dieses in einfacher Weise zur Betätigung der Verriegelungseinrichtung 18 mittels entsprechender Authentifizierung durch den berechtigen Nutzer aktivierbar sein. Zweckmäßigerweise dient das Schloss 19, 20 am Akku 13 gleichzeitig zur Diebstahlsicherung des Akkus 13 am Rahmen 2. Das bedeutet, dass der Akku 13 vom Rahmen 2 lediglich bei berechtigter Betätigung des Schlosses 19, 20 abnehmbar ist.

Anstelle einer trennbaren Steckerverbindung kann die eine Seite 6 des Ladekabels 5 auch durch eine feste elektrische Verbindung mit dem Akku 13 realisiert sein, was jedoch nicht weiter gezeigt ist, so dass sich dann die Verriegelungseinrichtung 18 erübrigt.

Zweckmäßigerweise ist der Stecker 8 des Schloss- und/oder Ladekabels 5 in der Steckeraufnahme 9 am Rahmen 2 verriegelbar, so dass die diebstahlgesicherte Anordnung des Fahrzeugs 1 am Gegenstand 10 gewährleistet ist. Die Verriegelungseinrichtung 35 für die Steckeraufnahme 9 ist in Fig. 1 lediglich schematisch gezeigt, jedoch kann diese Verriegelungseinrichtung 35 wie die am Akku 13 befindliche Verriegelungseinrichtung 18 ausgestaltet sein. Insbesondere kann es sich bei der Verriegelungseinrichtung 35 um eine mittels eines mechanischen Schlüssels betätigbare, mechanische Verriegelung und/oder um eine mittels eines Codes auslösbare elektrische Verriegelung handeln. Handelt es sich um eine elektrische Verriegelung, so kann zweckmäßigerweise die Verriegelung des Steckers 8 in der Steckeraufnahme 9 und/oder des Akku-Steckers 15 in der Akku-Steckdose 14 bei erfolgreicher Authentifizierung des berechtigten Nutzers sperrbar und/oder freigebbar sein. Des Weiteren kann das Schloss- und/oder Ladekabel 5 ausziehbar und/oder einschiebbar im und/oder am Rahmen 2 in der Art eines integrierten Schloss- und/oder Ladekabels, und zwar in einem Rahmenrohr 11 des Rahmens 2, angeordnet sein, so dass das Schloss- und/oder Ladekabel 5 bei Nichtgebrauch sowie für den Fahrbetrieb des Fahrzeugs 1 entsprechend vollständig im Rahmen 2 verstaubar ist.

Die Überwachung des Schloss- und/oder Ladekabels 5 wird mittels dauerhaft zyklischer paarungsbasierter Kryptografie vom Steuergerät 12 durchgeführt, wie in Fig. 1 zu sehen ist. In einer Ausgestaltung erfolgt dann die dauerhaft zyklische paarungsbasierte Kryptografie vom Steuergerät 12 über das Schloss- und/oder Ladekabel 5 sowie den Stecker 8 und die Steckeraufnahme 9 zum Steuergerät 12 in der Art einer Schleife. Unterstützend für das Steuergerät 12 kann eine Elektronik 21 mit dem Stecker 8 am Schloss- und/oder Ladekabel 5 und/oder eine Elektronik 22 mit der Steckeraufnahme 9 in Verbindung stehen. Falls gewünscht können die Elektronik 21 im Stecker 8 und/oder die Elektronik 22 in der Steckeraufnahme 9 integriert befindlich sein. In einer weiteren Ausgestaltung erfolgt dann die dauerhaft zyklische paarungsbasierte Kryptografie zwischen dem Steuergerät 12 und der Elektronik 21, 22 über das Schloss- und/oder Ladekabel 5. Die dauerhaft zyklische paarungsbasierte Kryptografie wird mittels eines verschlüsselten Frage-Antwort-Austausches 23 beziehungsweise eines sogenannten Challenge-Response-Prinzips des Geheimnisses über das Schloss- und/oder Ladekabel 5 realisiert. Ist eine Elektronik 21, 22 vorhanden, so wird der Frage-Antwort-Austausch 23 zwischen dem Steuergerät 12 und der Elektronik 21, 22 durchgeführt. Ist der Frage-Antwort-Austausch 23 nicht erfolgreich, so erkennt das Steuergerät 12 eine Manipulation eines Nichtberechtigten am Schloss- und/oder Ladekabel 5. Die Verschlüsselung für den Frage-Antwort-Austausch kann mittels eines beliebigen Verschlüsselungsverfahrens erfolgen. Bevorzugt wird hierfür jedoch der standardisierte Advanced Encryption Standard AES, der beispielsweise mit einer 128 AES, also mit einer Schlüssellänge von 128 Bit für die Verschlüsselung, erfolgt.

Eine weitere Verbesserung des Diebstahlschutzes gegen Umgehen der Detektion eines durchtrennten Schloss- und/oder Ladekabels 5 durch vorheriges elektrisches Überbrücken wird erreicht, indem ein Lichtleiter 36 im Schloss- und/oder Ladekabel 5 vorgesehen ist, wie in Fig. 2 mit einer gestrichelten Linie dargestellt ist. Das Signal, das das Geheimnis für die dauerhaft zyklische paarungsbasierte Kryptografie umfasst, ist dann als ein optisches Signal mittels des Lichtleiters 36 über das Schloss- und/oder Ladekabel 5 übertragbar, so dass ein elektrisches Überbrücken nicht mehr möglich ist. Das für die Übertragung vorgesehene optische Signal und/oder das nach der Übertragung empfangene optische Signal ist für die Weiterverarbeitung im Steuergerät 12 und/oder im Stecker 8 und/oder in der Steckeraufnahme 9 in ein elektrisches Signal wandelbar, das dann in üblicher Art und Weise im Steuergerät 12 kryptologisch auswertbar ist. Für die Wandelung zwischen dem optischen und dem elektrischen Signal kann - soweit vorhanden - die Elektronik 21, 22 verwendet werden.

Wird das Durchtrennen des Schloss- und/oder Ladekabels 5 und/oder das gewaltsame Entfernen des Steckers 8 aus der Steckeraufnahme 9 detektiert, so sind vom Steuergerät 12 entsprechende Reaktionen hierauf auslösbar. So kann das Steuergerät 12 einen Alarm 24, insbesondere in der Art eines Sofort-Alarms, direkt am Fahrzeug 1 auslösen, beispielsweise mittels einer am Fahrzeug 1 befindlichen Sirene 25. Es kann auch eine Alarmmeldung 26 auf eine entsprechende Schnittstelle, beispielsweise auf ein Mobilgerät 27, wie ein Smartphone o. dgl., übertragbar sein. Vom Mobilgerät 27 kann falls gewünscht die Alarmmeldung 26 an ein übergeordnetes Service-Center in einer Cloud 28 weitergegeben werden. Es kann auch eine automatische und/oder sofortige elektronische und/oder elektrische Verriegelung von einzelnen Komponenten des Fahrzeugs 1, beispielsweise des Steuergeräts 12, des Batteriemanagementsystems für den Akku 13, eines Displays 29 erfolgen, um diese im Falle eines Diebstahls unbrauchbar zu machen. Es kann ebenso eine automatische und/oder sofortige mechanische Verriegelung von einzelnen Komponenten des Fahrzeugs 1, beispielsweise des Tretlagers, der Antriebsachse o. dgl.. erfolgen, so dass das Fahrzeug 1 nicht mehr beweg- und/oder betreibbar ist. Durch die genannten Maßnahmen ist das Fahrzeug 1 für den Dieb dann wertlos.

Wie bereits erwähnt, besitzt das Fahrzeug 1 ein Display 29. Das Display 29 ist am Lenker 30 des Fahrzeugs 1 angeordnet und dient zur Anzeige von Betriebszuständen des Fahrzeugs 1 für den Nutzer. Das Display 29 kann zusätzlich oder alternativ als Eingabegerät für den Nutzer ausgestaltet sein und dient damit zur Kommunikation mit dem Nutzer. Insbesondere kann die Authentifizierung des berechtigten Nutzers über das Display und/oder Eingabegerät 29 erfolgen, indem mit dem Display und/oder Eingabegerät 29 eine Transponder-Kommunikation, eine Bluetooth-Kommunikation 31 zum Mobilgerät 27, eine NFC(Near Field Comunication)-Kommunikation 32 zu einem Wearable-Gerät 33 des Nutzers o. dgl. ermöglicht ist. Das Display und/oder Eingabegerät 29 steht wiederum mit dem Steuergerät 12 über ein Bussystem 34, wie den CAN-Bus, in Verbindung, so dass der eigentliche Authentifikationsvorgang für die Berechtigung des Nutzers zur Freigabe des Betriebs für das Fahrzeug 1 im Steuergerät 12 stattfinden kann. Andererseits kann das Display und/oder Eingabegerät 29 mittels des Mobilgeräts 27 mit der Cloud 28 in Verbindung bringbar sein, so dass beispielsweise Serviceprogramme von der Cloud 28 am Fahrzeug l durchführbar sind.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann die erfindungsgemäße Überwachung des Schloss- und/oder Ladekabels 5 nicht nur in Fahrzeugen 1, wie Pedelecs oder E-Bikes, eingesetzt werden sondern auch in sonstigen LEV(Light Electric Vehicles)s, beispielsweise bei Dreirädern, Lastenfahrrädern, Quads o. dgl., Verwendung finden.

### Bezugszeichen-Liste:

- 1:: Fahrzeug
- 2:: Rahmen
- 3, 4:: Rad
- 5:: Schlosskabel / Ladekabel / Schloss- und/oder Ladekabel
- 6,7:: Seite (von Schloss- und/oder Ladekabel)
- 8:: Stecker
- 9:: Steckeraufnahme (am Rahmen)
- 10:: Gegenstand
- 11:: Rahmenrohr
- 12:: Steuergerät
- 13:: Akku
- 14:: Akku-Steckdose
- 15:: Akku-Stecker
- 16:: Ladestation
- 17:: Steckeraufnahme (an Ladestation)
- 18:: Verriegelungseinrichtung (für Akku-Steckdose)
- 19:: (mechanisches) Schloss
- 20:: (elektrisches) Schloss
- 21:: Elektronik (am Stecker)
- 22:: Elektronik (an Steckeraufnahme)
- 23:: Frage-Antwort-Austausch
- 24:: (Sofort-)Alarm
- 25:: Sirene
- 26:: Alarmmeldung
- 27:: Mobilgerät
- 28:: Cloud
- 29:: Display / Display und/oder Eingabegerät
- 30:: Lenker (von Fahrzeug)
- 31:: Bluetooth-Kommunikation
- 32:: NFC-Kommunikation
- 33:: Wearable-Gerät
- 34:: Bussystem
- 35:: Verriegelungseinrichtung (für Steckeraufnahme am Rahmen)
- 36:: Lichtleiter

## Patentansprüche

1. Fahrzeug, insbesondere Pedelec, E-Bike, LEV(Light Electric Vehicle) o. dgl., mit einem Rahmen (2), und mit einem an dessen einen Seite (6) am und/oder im Rahmen (2) unmittelbar oder mittelbar befestigten Schlosskabel (5), wobei das Schlosskabel (5) gegebenenfalls ausziehbar und/oder einschiebbar im und/oder am Rahmen (2), insbesondere in einem Rahmenrohr (11) des Rahmens (2), in der Art eines integrierten Schlosskabels angeordnet ist, wobei an der anderen Seite (7) des Schlosskabels (5) ein Stecker (8) zur Aufnahme in einer Steckeraufnahme (9) am Rahmen (2) angeordnet ist, und wobei vorzugsweise der Stecker (8), insbesondere mechanisch und/oder elektrisch, verriegelbar in der Steckeraufnahme (9) am Rahmen (2) ist, derart dass das Fahrzeug (1) diebstahlgesichert an einem Gegenstand (10) mittels des Schlosskabels (5) festlegbar ist, **dadurch gekennzeichnet, dass** ein Steuergerät (12) zur Überwachung des Schlosskabels (5) vorgesehen ist, und dass die Überwachung mittels paarungsbasierter Kryptografie der Übertragung eines Geheimnisses, insbesondere zwischen dem Steuergerät (12) sowie dem Stecker (8) und/oder der Steckeraufnahme (9), über das Schlosskabel (5) erfolgt, derart dass ein Durchtrennen des Schlosskabels (5) und/oder ein unautorisiertes Entfernen des Steckers (8) aus der Steckeraufnahme (9) detektierbar ist.

2. Fahrzeug nach Anspruch 1, **dadurch gekennzeichnet, dass** am und/oder im Rahmen (2) ein Akku (13) angeordnet ist, dass es sich vorzugsweise bei dem Schlosskabel (5) um ein Ladekabel handelt, wobei der Akku (13) mit der einen Seite (6) des Ladekabels (5) elektrisch verbunden ist, derart dass eine Energieübertragung mittels des Ladekabels (5) von einer Ladestation (16) auf den Akku (13) zum Aufladen des Akkus (13) ermöglicht ist, insbesondere indem der Stecker (8) an der anderen Seite (7) des Ladekabels (5) in eine Steckeraufnahme (17) an der Ladestation (16) einsteckbar ist, dass weiter vorzugsweise der Akku (13) eine Akku-Steckdose (14) zur Aufnahme eines an der einen Seite (6) des Ladekabels (5) befindlichen Akku-Steckers (15) aufweist, und dass noch weiter vorzugsweise eine Verriegelungseinrichtung (18) für die Akku-Steckdose (14) im Akku (13) vorgesehen ist, derart dass der in der Akku-Steckdose (14) eingesteckte Akku-Stecker (15) des Ladekabels (5) mittels der Verriegelungseinrichtung (18) in der Akku-Steckdose (14) sperrbar und/oder freigebbar ist.

3. Fahrzeug nach Anspruch 1 oder 2, **dadurch gekennzeichnet, dass** eine Elektronik (21, 22) mit dem Stecker (8) am Schloss- und/oder Ladekabel (5) und/oder mit der Steckeraufnahme (9) in Verbindung steht und/oder im Stecker (8) und/oder in der Steckeraufnahme (9) befindlich ist, derart dass die paarungsbasierte Kryptografie zwischen dem Steuergerät (12) und der Elektronik (21, 22) durchführbar ist, dass vorzugsweise die paarungsbasierte Kryptografie, insbesondere als dauerhaft zyklische paarungsbasierte Kryptografie, mittels eines verschlüsselten Frage-Antwort-Austausches (23) des Geheimnisses zwischen dem Steuergerät (12) und der Elektronik (21, 22) erfolgt, und dass weiter vorzugsweise die Verschlüsselung mittels des Advanced Encryption Standard AES, insbesondere 128 AES, erfolgt.

4. Fahrzeug nach Anspruch 1, 2 oder 3, **dadurch gekennzeichnet, dass** ein Lichtleiter (36) im Schloss- und/oder Ladekabel (5) vorgesehen ist, dass vorzugsweise das Signal für die paarungsbasierte Kryptografie als ein optisches Signal mittels des Lichtleiters (36) über das Schloss- und/oder Ladekabel (5) übertragbar ist, und dass weiter vorzugsweise das optische Signal für die Weiterverarbeitung im Steuergerät (12) und/oder im Stecker (8) und/oder in der Steckeraufnahme (9), insbesondere in der Elektronik (21, 22), in ein elektrisches Signal wandelbar ist.

5. Fahrzeug nach einem der Ansprüche 1 bis 4, **dadurch gekennzeichnet, dass** bei Durchtrennen des Schloss- und/oder Ladekabels (5) und/oder bei Entfernen des Steckers (8) aus der Steckeraufnahme (9) ein Alarm (24) direkt am Fahrzeug (1), beispielsweise mittels einer Sirene (25), auslösbar ist.

6. Fahrzeug nach einem der Ansprüche 1 bis 5, **dadurch gekennzeichnet, dass** bei Durchtrennen des Schloss- und/oder Ladekabels (5) und/oder bei Entfernen des Steckers (8) aus der Steckeraufnahme (9) eine Alarmmeldung (26) auf eine entsprechende Schnittstelle, beispielsweise auf ein Mobilgerät (27), ein Smartphone o. dgl., übertragbar ist.

7. Fahrzeug nach einem der Ansprüche 1 bis 6, **dadurch gekennzeichnet, dass** bei Durchtrennen des Schloss- und/oder Ladekabels (5) und/oder bei Entfernen des Steckers (8) aus der Steckeraufnahme (9) eine automatische und/oder sofortige elektronische und/oder elektrische Verriegelung von einzelnen Komponenten des Fahrzeugs (1), beispielsweise des Steuergeräts (12), des Batteriemanagementsystems für den Akku (13), eines Displays und/oder Eingabegeräts (29) o. dgl., erfolgt.

8. Fahrzeug nach einem der Ansprüche 1 bis 7, **dadurch gekennzeichnet, dass** bei Durchtrennen des Schloss- und/oder Ladekabels (5) und/oder bei Entfernen des Steckers (8) aus der Steckeraufnahme (9) eine automatische und/oder sofortige mechanische Verriegelung von einzelnen Komponenten des Fahrzeugs (1), beispielsweise des Tretlagers, der Antriebsachse o. dgl., erfolgt.

9. Fahrzeug nach einem der Ansprüche 1 bis 8, **dadurch gekennzeichnet, dass** das Schloss- und/oder Ladekabel (5) für den Fahrbetrieb vollständig im Rahmen (2) verstaubar ist, und dass vorzugsweise die Verriegelung des Steckers (8) in der Steckeraufnahme (9) und/oder des Akku-Steckers (15) in der Akku-Steckdose (14) bei erfolgreicher Authentifizierung des berechtigten Nutzers sperrbar und/oder freigebbar ist.

10. Verfahren zur Diebstahlsicherung eines Fahrzeugs (1) mit einem Schloss- und/oder Ladekabel (5), insbesondere nach einem der vorhergehenden Ansprüche, **dadurch gekennzeichnet, dass** das Schloss- und/oder Ladekabel (5) mittels paarungsbasierter Kryptografie, insbesondere als dauerhaft zyklische paarungsbasierte Kryptografie, durch Übertragung eines Geheimnisses, insbesondere als verschlüsselter Frage-Antwort-Austausch, über das Schloss- und/oder Ladekabel (5) überwacht wird, derart dass ein Durchtrennen des Schloss- und/oder Ladekabels (5) und/oder ein unautorisiertes Entfernen eines Steckers (8) am Schloss- und/oder Ladekabel (5) aus einer Steckeraufnahme (9) detektierbar ist.
